# EUROPEAN PATENT SPECIFICATION

(11) **EP 3 319 359 B1**
(45) Date of publication and mention of the grant of the patent: **01.09.2021**
(21) Application number: 15896996.4
(22) Date of filing: 10.11.2015
(51) Int. Cl.: H04W 24/08, H04L 12/26

(54) **USER DATA TRACKING METHOD AND DEVICE**
BENUTZERDATENVERFOLGUNGSVERFAHREN UND -VORRICHTUNG
PROCÉDÉ ET DISPOSITIF DE SUIVI DE DONNÉES D'UTILISATEUR

(30) Priority: 30.06.2015 CN 201510374831
(43) Date of publication of application: 09.05.2018
(73) Proprietor: ZTE Corporation, Shenzhen, Guangdong 518057 (CN)
(72) Inventor: LI, Ruifang, Shenzhen Guangdong 518057 (CN)
(74) Representative: Boario, Enrico
(86) International application number: PCT/CN2015/094239
(87) International publication number: WO 2017/000468

(56) References cited:
- EP-A1- 1 954 079
- EP-A1- 1 954 079
- WO-A1-2009/045138
- CN-A- 102 547 675
- CN-A- 102 547 675
- CN-A- 102 572 925
- CN-A- 103 067 986
- ERICSSON: "Subscriber and equipment trace for LTE", 3GPP DRAFT; R3-070914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kobe, Japan; 20070502, 2 May 2007 (2007-05-02), XP050161798, [retrieved on 2007-05-02]
- "3 Generation Partnership Project; Technical Specification Group Radio Access Network; Evolved Universal Terrestrial Radio Access Network (E-UTRAN); S1 Application Protocol (S1AP) (Release 12)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V12.5.0, 21 March 2015 (2015-03-21), pages 1-301, XP050927996,

## Description

### TECHNICAL FIELD

The disclosure relates to the field of mobile communications, and in particular to a method and device for tracking user data during network optimization and operation monitoring in Long Term Evolution (LTE).

### BACKGROUND

In a commercial communication network, a performance index of the network and a behavior of a user are required to be monitored in real time, such that when a problem occurs to a certain user, the problem may be solved immediately. When the user is accessed, measurement information and related signal information of the user are recorded continuously. When a failure occurs to the user, the recorded measurement information of a User Equipment (UE) is reported to a back end for performing a reason analysis on the failure of the user. Hence, it is a very effective method that all behavioral data of the user can be associated to be analyzed on the whole.

CN 102 547 675 A disclosed a method for tracking the whole network of an LTE wireless network.

EP 1 954 079 A1 disclosed a device for controlling a trace function in cellular mobile systems with flat architecture.

WO 2009/045138 A1 disclosed methods and arrangements for initiation of a terminal trace in a mobile telecommunication network having a radio network architecture similar to the enhance UTRAN.

3 Generation Partnership Project disclosed the Source eNB to target eNB Transparent Container IE is an information element that is produced by the source eNB and is transmitted to the target eNB.

At present, the method for tracking user data is implemented by tracking data interaction between an eNodeB (eNB) and a core network. In a practical application, for the method, it is required that the current core network supports user data tracking. In case that the core network does not support user data tracking, such a tracking method is undesirable, since not only the user is difficult to be tracked, but also more time and labor are wasted.

### SUMMARY

To solve the above problems, the disclosure provides a method and device for tracking user data as set out in the independent claims. The method for tracking user data includes: when a UE is accessed to an eNB of a serving cell, the eNB of the serving cell allocates a UE Global Record Identifier (UERecordId) to the UE; when the UE is switched to an eNB of a target cell, the eNB of the serving cell transmits the UERecordId of the UE to the eNB of the target cell; reporting, by the eNB of the target cell, to a back-end network manager or a third party application the UERecordId carried in data information of the UE; the eNB of the serving cell reports to the back-end network manager or the third party application data information of the UE carrying the UERecordId; in an S1 handover scene or an X2 handover scene, carrying, by the eNB of the serving cell, the UERecordId of the UE through adding a Source To Target Transparent Container, STTTC, in a handover request message to transmit to the eNB of the target cell.

In an embodiment, the UERecordId allocated by the eNB of the serving cell to the UE is not the same with the UERecordIds of other UEs belonging to the eNB of the serving cell. The UERecordId is configured to track the data information of the UE by the back-end network manager or the third party application.

In an embodiment, the data information of the UE includes at least one of: access information of the UE, capacity information of the UE, handover information of the UE, and release information of the UE.

In an embodiment, the operation that the eNB of the serving cell reports to the back-end network manager or the third party application the data information of the UE carrying the UERecordId includes: when the eNB of the serving cell reports to the back-end network manager or the third party application an eNB tracking log, wherein UE data information of the eNB tracking log carries the UERecordId of the UE.

The disclosure further provides a device for tracking user data, including: an allocation module, configured to allocate a UERecordId to the UE, when a UE is accessed to an eNB of a serving cell; a transmission module, configured to transmit the UERecordId of the UE to the eNB of the target cell, when the UE is switched to an eNB of a target cell; and a reporting module, configured to report, by the eNB of the target cell, the data information of the UE carrying the UERecordId to a back-end network manager or a third party application; in an S1 handover scene or an X2 handover scene, the transmission module is further configured to carry the UERecordId of the UE by adding a Source To Target Transparent Container, STTTC, in a handover request message to transmit to the eNB of the target cell.

In an embodiment, the UERecordId allocated by the allocation module to the UE is not the same with the UERecordIds of other UEs belonging to the eNB of the serving cell. The UERecordId is configured to track the data information of the UE by the back-end network manager or the third party application.

In an embodiment, the data information of the UE reported by the reporting module includes at least one of: access information of the UE, capacity information of the UE, handover information of the UE, and release information of the UE.

In an embodiment, the reporting module is further configured to report to an eNB tracking log the back-end network manager or the third party application, wherein UE data information of the eNB tracking log carries the UERecordId of the UE.

When the allocation module, the transmission module and the reporting module execute processing, it may be implemented using a Central Processing Unit (CPU), a Digital Signal Processor (DSP) or a Field-Programmable Gate Array (FPGA).

When the receiving module and the user data extraction module execute processing, the receiving module and the user data extraction module may be implemented using a CPU, a DSP or an FPGA.

By the method or the device of the disclosure, when the UE is accessed to the eNB of the serving cell, the eNB of the serving cell allocates the UERecordId to the UE; when the UE is switched to the eNB of the target cell, the eNB of the serving cell transmits the UERecordId of the UE to the eNB of the target cell, such that when the eNB of the serving cell and the eNB of the target cell report to the back-end network manager or the third party application the data information of the UE, the UERecordId is carried; and when receiving the eNB tracking log reported by the eNB, the back-end network manager or the third party application decodes the received eNB tracking log to extract the data having a same UERecordId. Thus, the user data tracking for all sources to a target transparent container is implemented, a core network is not required to support the user data tracking, the reliability of the user data tracking is improved, and the time and the labor are saved.

### BRIEF DESCRIPTION OF DRAWINGS

FIG. 1 is a flowchart of a method for tracking user data provided by a first embodiment of the disclosure.
FIG. 2 is a schematic diagram of a UERecordId generation rule.
FIG. 3 is a flowchart of a first example of the disclosure.
FIG. 4 is a flowchart of a method for tracking user data provided by a second embodiment of the disclosure.
FIG. 5 is a schematic structural diagram of a device for tracking user data provided by a third embodiment of the disclosure.
FIG. 6 is a schematic structural diagram of a device for tracking user data provided by a fourth embodiment of the disclosure.

### DETAILED DESCRIPTION

The technical solutions of the disclosure will be described below in detail with reference to accompanying drawings and specific embodiments.

### First embodiment

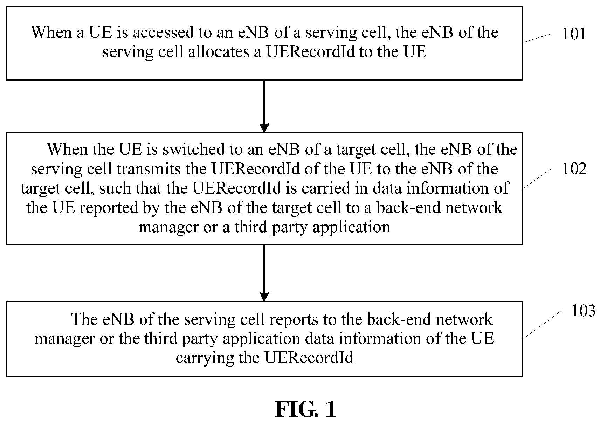

A first embodiment of the disclosure provides a method for tracking user data. As shown in FIG. 1, the method includes following steps.
In step 101, when a UE is accessed to an eNB of a serving cell, the eNB of the serving cell allocates a UERecordId to the UE.
In step 102, when the UE is switched to an eNB of a target cell, the eNB of the serving cell transmits the UERecordId of the UE to the eNB of the target cell, such that the UERecordId is carried in data information of the UE reported by the eNB of the target cell to a back-end network manager or a third party application.
In step 103, the eNB of the serving cell reports to the back-end network manager or the third party application data information of the UE carrying the UERecordId.

Herein, the UERecordId is configured to track data information of the UE by the back-end network manager or the third party application.

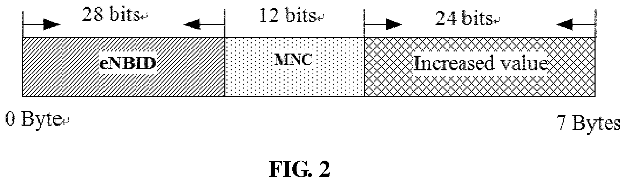

In specific implementation, in the step 101, the basic principle with which the eNB of the serving cell allocates the UERecordId to the UE is that the UERecordId is single and non-repetitive, that is, the UERecordId allocated by the eNB of the serving cell to the UE accessed to the serving cell is unique and is not the same with UERecordIds of other UEs belonging to the eNB of the serving cell. Specifically, the UERecordId may be composed of eight bytes, which are combined in a combined generation rule of an eNB Identifier ID) and Mobile Network Code (MNC). FIG. 2 is a systematic diagram of a UERecordId generation rule. As shown in FIG. 2, first twenty-eight bits in zero to third bytes are filled as the eNB ID. According to a protocol, twenty bits are required for filling the eNB ID of a macro eNB and twenty-eight bits are required for filling the eNB ID of a micro eNB. For rear four bits of the third byte and eight bits of the fourth byte, i.e., this twelve bits are configured together to fill an MNC in a Public Land Mobile Network (PLMN). The MNC at most occupies 12-bit, which prevents the repetition of the UERecordId due to same configuration of the eNBIDs belonging to different PLMNs. The fifth to seventh bytes are filled as a number, and the number is 1 initially, and is added with 1 at each time after a UERecordId is allocated by the eNB and reversed after being to be a maximum value, that is, the number is progressively increased from ox011 to oxFFFFFF and is reversed when being oxFFFFFF.

In case of one LTE eNB, in this eNB, the UERecordId of the user is not changed. Whenever the eNB reports data information of the UE to the back-end network manager or the third party application, the UERecordId is carried in the data information. Herein, the data information of the UE may include at least one of: access information of the UE, capacity information of the UE, handover information of the UE, and release information of the UE.

In step 102, the eNB of the serving cell transmits the UERecordId of the UE to the eNB of the target cell, in specific implementation; this step may be implemented in following manner: the UERecordId is carried in the handover request message transmitted by the eNB of the serving cell to the eNB of the target cell. Specifically, in an S1 handover scene, the eNB of the serving cell adds a source to a target transparent container in a handover required transmitted to the eNB of the target cell to carry the UERecordId. In an X2 handover scene, the eNB of the serving cell adds the source to the target transparent container in the handover request transmitted to the eNB of the target cell to carry the UERecordId. The eNB of the target cell stores the UERecordId of the UE when receiving it and carries the UERecordId when reporting data information of the UE to the back-end network manager or the third party application. After the UE leaves away from the serving cell, the UERecordId of the user is deleted by the eNB of the serving cell.

In specific implementation, the operation that the eNB of the serving cell and the eNB of the target cell carry the UERecordId when reporting the data information of the UE may be implemented in following manner: when the eNBs report information of an eNB tracking log to the back-end network manager or the third party application according to a type of an event, UERecordId information of the UE is included in UE data information of the log information.

By analyzing the reported data and signaling, the back-end network manager or the third party application decodes and extracts data and signaling having a same UERecordId from the reported data and signaling, so that the data having the same UERecordId are associated, thereby achieving purpose of user data tracking is implemented.

On the basis of the basic steps of the method for tracking user data, the scenes triggered by different task operation modes are different. Hereinafter, the content of the disclosure will be further illustrated in some typical embodiments.

The method for tracking user data provided by the first embodiment of the disclosure will be described below in detail with specific examples.

### First Example

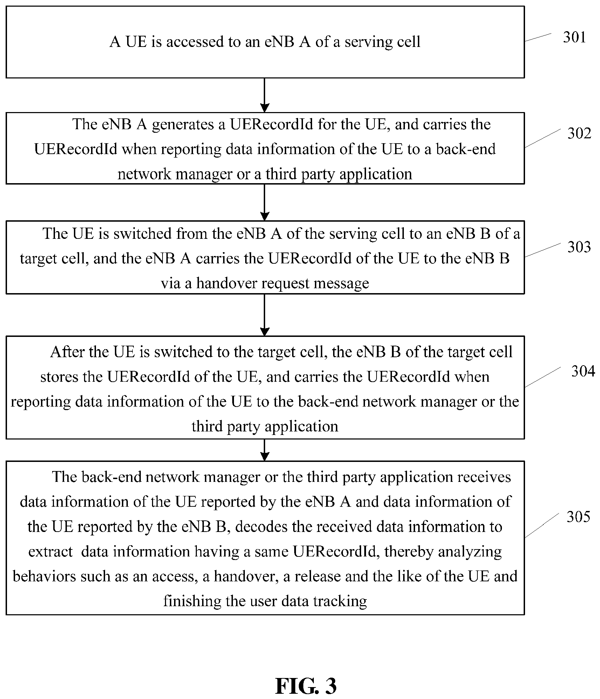

FIG. 3 is a flowchart of a first example of the disclosure and illustrates a method for tracking user data in a scene in which an S1 handover occurs to a user. As shown in FIG. 3, it includes the following steps.
In step 301, a UE is accessed to an eNB A of a serving cell.
In step 302, the eNB A generates a UERecordId for the UE, and carries the UERecordId when reporting data information of the UE to a back-end network manager or a third party application.
In step 302, the data information of the UE mainly includes: a call type, an eNBID, physical cell information, capacity information of the UE, etc.
In step 303, the UE is switched from the eNB A of the serving cell to an eNB B of a target cell, and the eNB A carries the UERecordId of the UE to the eNB B via a handover request message.

In a practical implementation process, in the S1 handover scene, the eNB A may carry the UERecordId of the UE to the eNB B via a source to target transparent container in the handover request.
In step 304, after the UE is switched to the target cell, the eNB B of the target cell stores the UERecordId of the UE, and carries the UERecordId when reporting the data information of the UE to the back-end network manager or the third party application.
In step 304, the data information of the UE mainly includes: handover information of the UE, such as a handover interface type, a handover type, a handover source side/target side, a handover reason, handover cell information, a handover starting time, a handover end time, etc.

During the handover, each of the eNB A and the eNB B reports handover information of the UE and carries the UERecordId in handover information. After the handover is completed, the eNB A of the serving cell reports release information of the UE, such as a release reason, a release type, a normal/abnormal release, etc., in which the UERecordId is also carried in the reported release information, and thereafter the UERecordId of the user is deleted by the eNB A.

In step 305, the back-end network manager or the third party application receives data information of the UE reported by the eNB A and data information of the UE reported by the eNB B, decodes data and extracts data information having a same UERecordId, thereby analyzing behaviors such as an access, a handover, a release and the like of the UE and finishing the user data tracking.

In a practical implementation process, when the user has an X2 handover, the user data tracking process is similar to that in the S1 handover scene and will not be repeated here.

### Second embodiment not falling within the scope of the claims

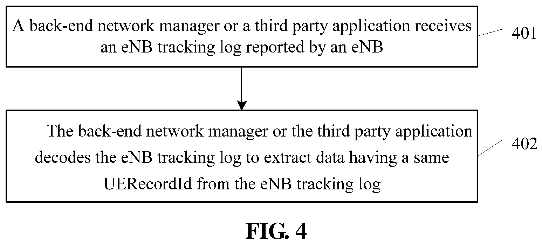

A second embodiment of the disclosure provides a method for tracking user data. As shown in FIG. 4, the method includes following steps.
In step 401, a back-end network manager or a third party application receives an eNB tracking log reported by an eNB.
In step 402, the back-end network manager or the third party application decodes the eNB tracking log to extract data having a same UERecordId in the eNB tracking log.

### Third embodiment

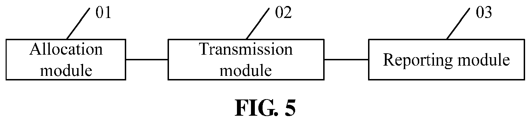

A third embodiment of the disclosure provides a device for tracking user data. As shown in FIG. 5, the device for tracking user data includes: an allocation module 01, a transmission module 02 and a reporting module 03, where the allocation module 01 is configured, when a UE is accessed to an eNB of a serving cell, to allocate a UERecordId to the UE; the transmission module 02 is configured, when the UE is switched to an eNB of a target cell, to transmit the UERecordId of the UE to the eNB of the target cell, such that the UERecordId is carried in data information of the UE reported by the eNB of the target cell to a back-end network manager or a third party application; the reporting module 03 is configured to report data information of the UE carrying the UERecordId. The UERecordId is configured to track data information of the UE by the back-end network manager or the third party application.

In specific implementation, the UERecordId allocated by the allocation module 01 to the UE is not the same with the UERecordIds of other UEs belonging to the eNB of the serving cell. The transmission module 02 is further configured, when the UE is switched from the serving cell to the target cell, to carry the UERecordId of the UE in a handover request message to transmit to the eNB of the target cell.

The data information of the UE reported by the reporting module 03 may include at least one of: access information of the UE, capacity information of the UE, handover information of the UE, and release information of the UE.

The reporting module 03 is further configured, when reporting an eNB tracking log to the back-end network manager or the third party application, to carry the UERecordId in UE data information of the eNB tracking log.

### Fourth embodiment not falling within the scope of the claims

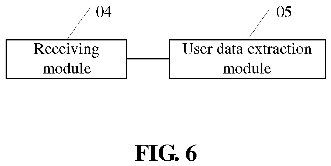

A fourth embodiment of the disclosure provides a device for tracking user data, located at a back-end network manager or a third party application. As shown in FIG. 6, the device for tracking user data includes: a receiving module 04, and a user data extraction module 05.

The receiving module 04 is configured to receive an eNB tracking log reported by an eNB and transmit the eNB tracking log to the user data extraction module.

The user data extraction module 05 is configured to decode the received eNB tracking log and extract data having a same UERecordId.

According to the disclosure, the device for tracking user data as well as the allocation module, the transmission module, the reporting module, the receiving module and the user data extraction module of the device may be implemented by a processor in the eNB, also may be implemented by a specific logic circuit, and also may be implemented by software or a combination of software and hardware. In a practical application, the processor may be a CPU, an MPU, a DSP or an FPGA, etc.

The above are only preferred embodiments of the disclosure and are not intended to limit a scope of protection of the disclosure, which is defined by the appended claims.

## Claims

1. A method for tracking user data, the method comprises
when a User Equipment, UE, is accessed to an eNodeB, eNB, of a serving cell, allocating (101), by the eNB of the serving cell, a UE Global Record Identifier, UERecordId, to the UE;
when the UE is switched to an eNB of a target cell, transmitting (102), by the eNB of the serving cell, the UERecordId of the UE to the eNB of the target cell;
**characterized in that**, transmitting (102), by the eNB of the serving cell, the UERecordId of the UE to the eNB of the target cell comprises: in an S1 handover scene or an X2 handover scene, carrying, by the eNB of the serving cell, the UERecordId of the UE through adding a Source To Target Transparent Container, STTTC, in a handover request message to transmit to the eNB of the target cell;
wherein when each of the eNB of the serving cell and the eNB of the target cell reports data information of the UE to a back-end network manager or a third party application, the UERecordId of the UE is carried in the data information.

2. The method according to claim 1, wherein the UERecordId allocated by the eNB of the serving cell to the UE is not the same with the UERecordIds of other UEs belonging to the eNB of the serving cell; and the UERecordId is configured to track data information of the UE by the back-end network manager or the third party application.

3. The method according to claim 1, wherein the data information of the UE includes at least one of: access information of the UE, capacity information of the UE, handover information of the UE, and release information of the UE.

4. The method according to any one of claims 1-3, wherein reporting, by the eNB of the serving cell, to the back-end network manager or the third party application the data information of the UE carrying the UERecordId comprises: reporting, by the eNB of the serving cell, to the back-end network manager or the third party application an eNB tracking log, wherein UE data information of the eNB tracking log carries the UERecordId of the UE.

5. A device for tracking user data, comprising:
an allocation module (01), configured to allocate a UE Global Record Identifier, UERecordId, to the UE, when a User Equipment, UE, is accessed to an eNodeB, eNB, of a serving cell; and
a transmission module (02), configured to transmit the UERecordId of the UE to the eNB of the target cell when the UE is switched to an eNB of a target cell;
**characterized in that**, in an S1 handover scene or an X2 handover scene, the transmission module (02) is further configured to carry the UERecordId of the UE by adding a Source To Target Transparent Container, STTTC, in a handover request message to transmit to the eNB of the target cell;
wherein the device for tracking user data further comprises a reporting module (03), configured to report, by each of the eNB of the serving cell and the eNB of the target cell, data information of the UE to a back-end network manager or a third party application, the UERecordId of the UE being carried in the data information.

6. The device according to claim 5, wherein the UERecordId allocated by the allocation module (01) to the UE is not the same with the UERecordIds of other UEs belonging to the eNB of the serving cell; and the UERecordId is configured to track data information of the UE by the back-end network manager or the third party application.

7. The device according to claim 5, wherein the data information of the UE reported by the reporting module (03) includes at least one of: access information of the UE, capacity information of the UE, handover information of the UE, and release information of the UE.

8. The device according to any one of claims 5-7, wherein the reporting module (03) is further configured to report to an eNB tracking log the back-end network manager or the third party application, wherein UE data information of the eNB tracking log carries the UERecordId of the UE.

## Patentansprüche

1. Verfahren zum Verfolgen von Benutzerdaten, wobei das Verfahren umfasst, dass,
wenn auf ein Benutzergerät, UE, zu einem eNodeB, eNB, einer bedienenden Zelle zugegriffen wird, zuweisen (101), durch den eNB der bedienenden Zelle, dem UE einen UE Global Record Identifier, UERecordld;
wenn das UE zu einem eNB einer Zielzelle geschaltet wird, übertragen (102), durch den eNB der bedienenden Zelle, des UERecordld des UE an den eNB der Zielzelle;
**dadurch gekennzeichnet, dass** das Übertragen (102) des UERecordld des UE an den eNB der Zielzelle durch den eNB der bedienenden Zelle Folgendes umfasst: in einer S1-Handover-Szene oder einer X2-Handover-Szene, tragen, durch den eNB der bedienenden Zelle, des UERecordld des UE durch Hinzufügen eines Source To Target Transparent Containers, STTTC, in eine Handover-Anforderungsnachricht, zum Übertragen an den eNB der Zielzelle;
wobei, wenn sowohl der eNB der bedienenden Zelle als auch der eNB der Zielzelle Dateninformationen des UE an einen Back-End-Netzwerkmanager oder eine Drittanwendung melden, der UERecordld des UE in den Dateninformationen übertragen wird.

2. Verfahren nach Anspruch 1, wobei der UERecordld, der von der eNB der bedienenden Zelle dem UE zugewiesen wird, nicht derselbe ist wie die UERecordlds anderer UEs, die zur eNB der bedienenden Zelle gehören; und
der UERecordld so konfiguriert ist, dass er Dateninformationen des UE durch den Back-End-Netzwerkmanager oder die Drittanwendung verfolgt.

3. Verfahren nach Anspruch 1, wobei die Dateninformationen des UE mindestens eines der folgenden Elemente enthalten:
Zugangsinformationen des UE, Kapazitätsinformationen des UE,
Übergabeinformationen des UE und Freigabeinformationen des UE.

4. Verfahren nach einem der Ansprüche 1 bis 3, wobei das Melden, durch die eNB der bedienenden Zelle, der Dateninformationen des UE, die den UERecordld tragen an den Back-End-Netzwerkmanager oder die Drittanwendung umfasst:
Melden eines eNB-Verfolgungsprotokolls durch die eNB der bedienenden Zelle an den Back-End-Netzwerkmanager oder die Drittanwendung, wobei die UE-Dateninformationen des eNB-Verfolgungsprotokolls den UERecordld des UE tragen.

5. Vorrichtung zum Verfolgen von Benutzerdaten, umfassend:
ein Zuweisungsmodul (01), das dazu eingerichtet ist, einen UE Global Record Identifier, UERecordld, dem UE zuzuweisen, wenn ein Benutzergerät, UE, auf ein eNodeB, eNB, einer bedienenden Zelle zugegriffen wird; und
ein Übertragungsmodul (02), das dazu eingerichtet ist, es den UERecordld des UE an den eNB der Zielzelle überträgt, wenn das UE zu einem eNB einer Zielzelle geschaltet wird;
**dadurch gekennzeichnet, dass** in einer S1-Handover-Szene oder einer X2-Handover-Szene das Übertragungsmodul (02) weiterhin konfiguriert ist, den UERecordld des UE durch Hinzufügen eines Source To Target Transparent Containers, STTTC, in einer Handover-Anforderungsnachricht zu übertragen, um ihn an den eNB der Zielzelle zu übertragen;
wobei die Vorrichtung zum Verfolgen von Benutzerdaten ferner ein Berichtsmodul (03) umfasst, das dazu eingerichtet ist, es sowohl durch die eNB der bedienenden Zelle als auch durch die eNB der Zielzelle Dateninformationen des UE an einen Back-End-Netzwerkmanager oder eine Drittanwendung zu melden, wobei der UERecordld des UE in den Dateninformationen getragen wird.

6. Vorrichtung nach Anspruch 5, wobei der UERecordld, der von dem Zuweisungsmodul (01) dem UE zugewiesen wird, nicht derselbe ist wie die UERecordlds anderer UEs, die zu dem eNB der bedienenden Zelle gehören; und
der UERecordld dazu eingerichtet ist, Dateninformationen des UE durch den Backend-Netzwerkmanager oder die Drittanwendung zu verfolgen.

7. Vorrichtung nach Anspruch 5, wobei die Dateninformationen des UE, die von dem Berichtsmodul (03) gemeldet werden, mindestens eines der folgenden Elemente enthalten:
Zugangsinformationen des UE, Kapazitätsinformationen des UE,
Übergabeinformationen des UE und Freigabeinformationen des UE.

8. Vorrichtung nach einem der Ansprüche 5 bis 7, wobei das Meldemodul (03) ferner dazu eingerichtet ist, an ein eNB-Verfolgungsprotokoll des Back-End-Netzwerkmanagers oder der Drittanbieteranwendung zu berichten, wobei UE-Dateninformationen des eNB-Verfolgungsprotokolls den UERecordld des UE tragen.

## Revendications

1. Procédé de suivi de données d'utilisateur, le procédé comprend
lorsqu'un équipement utilisateur, UE, a accédé à un eNodeB, eNB, d'une cellule de desserte, l'allocation (101), par l'eNB de la cellule de desserte, d'un identificateur d'enregistrement global d'UE, UERecordId, à l'UE ;
lorsque l'UE est commuté vers un eNB d'une cellule cible, la transmission (102), par l'eNB de la cellule de desserte, de l'UERecordId de l'UE à l'eNB de la cellule cible ;
**caractérisé en ce que**, la transmission (102), par l'eNB de la cellule de desserte, de l'UERecordId de l'UE à l'eNB de la cellule cible comprend : dans une scène de transfert intercellulaire S1 ou une scène de transfert intercellulaire X2, le transport, par l'eNB de la cellule de desserte, de l'UERecordId de l'UE par l'ajout d'un conteneur transparent de source à cible, STTTC, dans un message de demande de transfert intercellulaire à transmettre à l'eNB de la cellule cible ;
dans lequel lorsque chacun de l'eNB de la cellule de desserte et de l'eNB de la cellule cible rapporte des informations de données de l'UE à un gestionnaire de réseau dorsal ou à une application tierce, l'UERecordId de l'UE est transporté dans les informations de données.

2. Procédé selon la revendication 1, dans lequel l'UERecordId alloué par l'eNB de la cellule de desserte à l'UE n'est pas le même que les UERecordId d'autres UE appartenant à l'eNB de la cellule de desserte ; et l'UERecordId est configuré pour suivre des informations de données de l'UE par le gestionnaire de réseau dorsal ou l'application tierce.

3. Procédé selon la revendication 1, dans lequel les informations de données de l'UE comportent au moins un parmi : des informations d'accès de l'UE, des informations de capacité de l'UE, des informations de transfert intercellulaire de l'UE et des informations de libération de l'UE.

4. Procédé selon l'une quelconque des revendications 1 à 3, dans lequel le rapport, par l'eNB de la cellule de desserte, au gestionnaire de réseau dorsal ou à l'application tierce, des informations de données de l'UE transportant l'UERecordId, comprend : le rapport, par l'eNB de la cellule de desserte, au gestionnaire de réseau dorsal ou à l'application tierce, d'un journal de suivi d'eNB, dans lequel des informations de données d'UE du journal de suivi d'eNB transportent l'UERecordId de l'UE.

5. Dispositif de suivi de données d'utilisateur, comprenant :
un module d'allocation (01), configuré pour allouer un identificateur d'enregistrement global d'UE, UERecordId, à l'UE, lorsqu'un équipement d'utilisateur, UE, a accédé à un eNodeB, eNB, d'une cellule de desserte ; et
un module de transmission (02), configuré pour transmettre l'UERecordId de l'UE à l'eNB de la cellule cible lorsque l'UE est commuté vers un eNB d'une cellule cible ;
**caractérisé en ce que**, dans une scène de transfert intercellulaire S1 ou une scène de transfert intercellulaire X2, le module de transmission (02) est en outre configuré pour transporter l'UERecordId de l'UE par l'ajout d'un conteneur transparent de source à cible, STTTC, dans un message de demande de transfert intercellulaire à transmettre à l'eNB de la cellule cible ;
dans lequel le dispositif de suivi de données d'utilisateur comprend en outre un module de rapport (03), configuré pour rapporter, par chacun de l'eNB de la cellule de desserte et de l'eNB de la cellule cible, des informations de données de l'UE à un gestionnaire de réseau dorsal ou à une application tierce, l'UERecordId de l'UE étant transporté dans les informations de données.

6. Dispositif selon la revendication 5, dans lequel l'UERecordId alloué par le module d'allocation (01) à l'UE n'est pas le même que les UERecordId d'autres UE appartenant à l'eNB de la cellule de desserte ; et l'UERecordId est configuré pour suivre des informations de données de l'UE par le gestionnaire de réseau dorsal ou l'application tierce.

7. Dispositif selon la revendication 5, dans lequel les informations de données de l'UE rapportées par le module de rapport (03) comportent au moins un parmi : des informations d'accès de l'UE, des informations de capacité de l'UE, des informations de transfert intercellulaire de l'UE et des informations de libération de l'UE.

8. Dispositif selon l'une quelconque des revendications 5 à 7, dans lequel le module de rapport (03) est en outre configuré pour rapporter un journal de suivi d'eNB au gestionnaire de réseau dorsal ou à l'application tierce, dans lequel les informations de données d'UE du journal de suivi d'eNB transportent l'UERecordId de l'UE.
